# EUROPÄISCHE PATENTANMELDUNG

(11) **EP 4 299 369 A1**
(43) Veröffentlichungstag der Anmeldung: **03.01.2024**
(21) Anmeldenummer: 22181252.2
(22) Anmeldetag: 27.06.2022
(51) Int. Cl.: B60L 58/13, B60L 58/21

(54) **VORRICHTUNG ZUM BETRIEB EINES FORTBEWEGUNGSMITTELS UND DIE VERWENDUNG DER VORRICHTUNG ZUM BETRIEB EINES FORTBEWEGUNGSMITTELS**

(71) Anmelder: Thorsten, Roth, 44149 Dortmund (DE)
(72) Erfinder: Roth, Thorsten, 44149 Dortmund (DE); OPRI, Luan, 44789 Bochum (DE)
(74) Vertreter: Von Rohr Patentanwälte Partnerschaft mbB

(57) **Zusammenfassung**

Die vorliegende Erfindung betrifft das Gebiet wieder aufladbarer Akkumulatoren und/oder Ackumulatoreinheiten, die zur Verwendung in Kombination mit Elektromotoren ausgelegt sind, um Fortbewegungsmittel wie beispielsweise E-Scooter anzutreiben, die während des Betriebs des E-Scooters geladen werden können. Weiterhin betrifft die Erfindung ein Verfahren zum Laden von wieder aufladbaren Akkumulatoren und/oder Akkumulatoreinheiten während des Betriebs des Fortbewegungsmittels.

## Beschreibung

Die vorliegende Erfindung betrifft das technische Gebiet der Elektromobilität von Elektrofahrzeugen. Des Weiteren betrifft die vorliegende Erfindung die Verwendung einer Anordnung zum Betreiben eines Elektrofahrzeuges sowie ein Verfahren zum Betreiben eines Elektrofahrzeuges.

### STAND DER TECHNIK

Ein typisches Elektrofahrzeugdesign nach dem Stand der Technik, wie ein E-Auto (E-PKW), E-Scooter oder ein Elektrofahrrad, kann in die folgenden Subsysteme unterteilt werden: Antriebsstrang mit einem Elektromotor, einem Drehzahlregler, einem Wechselrichter, einer Batterie und - je nach Bauart - einer intelligenten zentralen Steuerung, welche die anderen Subsysteme koordiniert. Als Beispiel kann das Batterie-Subsystem typischerweise separat, beispielsweise die Batterie, mit Spezifikationen einschließlich Spannungs- und Stromwerten versehen werden. Ein Nachteil ist jedoch, dass diese Subsysteme häufig möglichst autark arbeiten. Dadurch arbeitet eine zentrale Steuerung häufig nicht so effektiv, da die gesamte bzw. dauerhafte Kompatibilität der Dateninformation der Subsysteme mit der Software nicht gewährleistet werden kann. Zugleich ist ein ständiges Updaten von Software auf andere Subsysteme für Transportmittel wie einem E-Scooter bislang untypisch.

Bei den bekannten E-Scootern wird die Geschwindigkeit und der damit verbundene Stromverbrauch über einen Geschwindigkeitsregler gesteuert. Dieser Geschwindigkeitsregler ist meist direkt mit der Stromquelle einer Batterie verbunden, welche den Motor mit der notwendigen Energie versorgt, um den E-Scooter zu beschleunigen.

Bekannt ist auch, dass ein Verbrennungsmotor als Antrieb für einen Generator fungieren kann, sowie Energie an eine Batterie abgeben kann, wenn weniger Energie zur Beschleunigung aufgebraucht werden muss, als tatsächlich verbraucht wird, wie beispielsweise durch Abbremsen oder bergab fahren. Durch regeneratives Bremsen wird ein Teil der Energie zurückgewonnen, die sonst bei Verwendung einer Mechanik verloren gehen würde. Dieser Vorgang wird auch als Rekuperation bezeichnet.

Je nach Art der Batterie sind bis zu 1000 Ladezyklen üblich, was einer Lebensdauer von ca. 5 Jahren entspricht. Ein wichtiger Faktor der Lebensdauer solcher Batterien ist das Ladeverhalten. Momentan werden beispielsweise die in Großstädten aufgestellten E-Scooter immer komplett aufgeladen und während der Benutzung häufig auch komplett leer gefahren. Um die Lebensdauer von wieder aufladbaren Batterien zu verlängern, sollten diese nie ganz entladen werden. Ein konstanter Ladezustand von 20 % bis 80 % ist optimal. Ebenfalls schädlich ist, die Batterie über die maximale Ladekapazität hinaus aufzuladen, da die hervorgerufene Überladung zu einer Überhitzung und Schäden führen kann.

Bei einer typischen wieder aufladbaren Batterie muss die Ladespannung höher sein als die Batteriespannung. Je höher die Ladespannung im Verhältnis zur Batteriespannung ist, desto mehr Strom fließt in die Batterie und die Erhöhung des Ladezustands der Batterie. Die Steuerung der Ladespannung ist eine der Möglichkeiten, die Geschwindigkeit des Aufladens zu steuern.

Weiterhin ist aus dem Stand der Technik ein Wechselrichter bekannt, der die Spannung vom Motor höher als die Akkumulatorspannung anhebt, damit der Strom zurück in die Batterie fließen kann, sodass ein Aufladen der Batterie ermöglicht wird.

Die Firma Bosch hat eine Technologie (https://www.bosch-mobility-solutions.com/de/loesungen/antriebe/hybrid/hochvolt-hybridsysteme/) vorgestellt, bei welchem ein separater Motor-Generator für hybride und elektrische Funktionen verwendet wird. Als Traktionsmotor wandelt der separate Motor-Generator elektrische Energie in mechanische Leistung um und ermöglicht so eine hybridische oder rein elektrische Fahrfunktion. Dabei überträgt der separat geschaltete Motor-Generator-je nach Applikation - das Drehmoment direkt auf das Getriebezahnrad. In diesem System leistet der E-Motor somit keine Antriebsarbeit, sondern wird umgepolt, um dann als Generator zu dienen. In diesem von Bosch propagiertem System erfolgt also eine reine Brems-Energierückgewinnung (Rekuperation).

Durch die Umwandlung von mechanischer in elektrischer Energie lädt der separate Motor-Generator die Fahrzeugbatterie.

Insgesamt ist das Gesamtenergiesystem von elektrisch betriebenen Fahrzeugen immer noch nicht vollständig zufriedenstellend und Bedarf einer weiteren technischen Verbesserung. Der Erfindung liegt die Aufgabe zugrunde eine verbesserte Energievorrichtung für ein Fortbewegungsmittel bereitzustellen, in welcher die Akkumulatoren und/oder Akkumulatoreinheiten während des Betriebs des Fortbewegungsmittels geladen werden, wobei das Laden möglichst ohne Ladungsverluste erreicht werden soll und wobei ein hoher Grad der Abnutzung des Ackumulators durch ständig wechselnde Ladungsverhältnisse besonders vorteilhaft reduziert wird.

### DETAILLIERTE BESCHREIBUNG

Zur Lösung dieser Aufgabe dient eine Vorrichtung zum Betreiben eines Fortbewegungsmittels, umfassend
mindestens einen Elektromotor und einen separaten Hochvolt-Generator ;
mindestens einen ersten Akkumulator und/oder eine erste Akkumulatoreinheit geeignet zur Bereitstellung einer ersten elektrischen Spannung zum Betrieb des Fortbewegungsmittels;
mindestens einen zweiten Akkumulator und/oder eine zweite Akkumulatoreinheit geeignet zur Bereitstellung einer elektrischen Spannung zum Betrieb des Fortbewegungsmittels,
ein Steuergerät als Batterie-Managementsystem, welches dafür eingerichtet ist, die mindestens zwei Akkumulatoren und/oder Akkumulatoreinheiten so zu steuern, dass das Fortbewegungsmittel entweder
   a) nur mit dem ersten Akkumulator und/oder der ersten Akkumulatoreinheit betrieben wird, oder
   b) nur mit dem zweiten Akkumulator und/oder der zweiten Akkumulatoreinheit betrieben wird.

Die erfindungsgemäße Vorrichtung ist dann dadurch gekennzeichnet, dass
der zweite Akkumulator und/oder die zweite Akkumulatoreinheit geladen wird, während die Spannung des ersten Akkumulators und/oder Akkumulatoreinheit zur Fortbewegung des Fortbewegungsmittels Anwendung findet; und
der erste Akkumulator und/oder die erste Akkumulatoreinheit geladen wird, während die Spannung des zweiten Akkumulators und/oder Akkumulatoreinheit zur Fortbewegung des Fortbewegungsmittels Anwendung findet; und
die Vorrichtung zusätzlich einen durch den mindestens einen Elektromotor zu betreibenden Generator verfügt und der Generator während des Betriebs denjenigen Akkumulator und/oder diejenige Akkumulatoreinheit lädt, welche nicht zum Betrieb des Fortbewegungsmittels verwendet wird.

Die erfindungsgemäße Funktion unterscheidet sich von dem vorbeschriebenen Stand der Technik. Erfindungsgemäß wird ein leichter Hochvolt-Generator mit einem maximalen Gewicht von 30 bis 40 kg verwendet, der dauerhaft (während des Betriebs des E-Fahrzeugs) Strom produziert bzw. während der Fahrt einen der Akkumulatoren/Akkumulatoreinheiten lädt. Hierdurch erhöht sich die Reichweite des E-Fahrzeugs, was zu einem verminderten stationären Ladezyklus führt und das Batteriegewicht reduziert (auch durch die Verwendung von mindestens zwei Akkumulatoren/Akkumulatoreinheiten).

Dazu kann man das Gewicht der Batterien variieren, so dass wir das Gewicht des Fahrzeuges deutlich reduziert wird. Erfindungsgemäß ist eine Gewichtsreduzierung um 10 bis 15 % möglich, was wiederum die Reichweite des E-Fahrzeuges erhöht. (je leichter die Batterie, desto höher die Reichweite).

Trotz unterschiedlicher Motorleistung, Gewicht und Wirkungsfaktor ist eine Reichweitenverlängerung im Rahmen der vorliegenden Erfindung von bis zu 20 % möglich.

Dazu kommt, dass die erfindungsgemäße Vorrichtung nicht sehr Aufwendig zu verbauen ist und ein Anschluss durch ein Zahnrad oder Keilriemen zur Antriebswelle der Elektromotoren realisierbar ist (verschiedene Standarddurchmesser auf das Getriebezahnrad oder Keilriemen).

Die erfindungsgemäße Vorrichtung ist kostengünstig bezüglich den erforderlichen Komponenten und Anpassungen realisierbar und einfach serienreif zu verbauen.

Der vorliegenden Erfindung liegen zwei verschiedene elektrische Vorgänge zugrunde.

Der eine elektrische Vorgang treibt einen oder mehrere Elektromotoren an, indem Strom von einer oder mehreren Akkumulatoren und/oder Akkumulatoreinheiten an den Elektromotor geliefert wird. Hierdurch wird das elektrisch betriebene Fortbewegungsmittel angetrieben. Diese Akkumulatoren und/oder Akkumulatoreinheiten werden während des Betriebs nicht geladen.

Der andere elektrische Vorgang erzeugt elektrische Energie durch einen oder mehrere Generatoren, die an einen oder mehrere Akkumulatoren und/oder Akkumulatoreinheiten weitergegeben werden und diese aufladen, bevorzugt ohne die Verwendung eines Wechselrichters. Diese Akkumulatoren und/oder Akkumulatoreinheiten werden zum Ladungszeitpunkt nicht zum Betrieb des Fortbewegungsmittels verwendet.

Der verwendete Generator wird dabei durch den mindestens einen Elektromotor betrieben.

Damit unterscheidet sich die vorliegende Erfindung von denjenigen Ausführungen, in welchen in einem Elektrofahrzeug zwar ein Generator verwendet wird, dieser jedoch durch einen herkömmlichen Verbrennungsmotor betrieben wird.

Erfindungsgemäß umfasst die Vorrichtung eine Mehrzahl an Akkumulatoren und/oder Akkumulatoreinheiten. Eine Akkumulatoreinheit besteht bevorzugt aus mehreren Akkumulatoren, die im Allgemeinen variabel durch Hinzufügen oder Abtrennen von einzelnen oder mehreren Akkumulatoren verschieden große Akkumulatoreinheiten bilden können, aber bei Betrieb eine nicht-trennbare Einheit darstellen. Entsprechend werden Akkumulator und/oder Akkumulatoreinheit erfindungsgemäß als Akkumulatoreinheiten zusammengefasst. Durch eine optimale Anordnung aus zusammengesetzten Akkumulatoren in eine Akkumulatoreinheit kann eine optimale Energiekapazität im Verhältnis zu anderen angeschlossenen Akkumulatoren und/oder Akkumulatoreinheiten und/oder im Verhältnis zu anderen Parametern wie dem angestrebten Routenverlauf gewährleistet werden.

Im Rahmen der vorliegenden Erfindung wird unter einem Fortbewegungsmittel ein elektrisch betriebenes Fortbewegungsmittel, insbesondere ein E-Auto, E-Fahrrad, E-Rollstuhl, E-Scooter, E-Roller oder E-Golfcart, verstanden.

Umfasst in diesen erfindungsgemäßen Fortbewegungsmitteln sind mindestens zwei Akkumulatoreinheiten, wobei mindestens eine erste Akkumulatoreinheit zur Bereitstellung einer elektrischen Spannung für den Betrieb des Fortbewegungsmittels geeignet ist. Diese erste Akkumulatoreinheit ist ebenfalls geeignet eine Startspannung bereitzustellen. Ist ein Starten des Betriebs durch die erste Akkumulatoreinheit nicht möglich, so wird bevorzugt eine andere Akkumulatoreinheit zum Starten der Vorrichtung verwendet. Auf diese Weise wird ein Starten der Vorrichtung gewährleistet, auch wenn eine erste Akkumulatoreinheit ein Starten nicht ermöglichen sollte. Bevorzugt wird die Energiezufuhr anschließend durch die Akkumulatoreinheit gewährleistet, welche die größte Energiekapazität zum Betreiben der Vorrichtung aufweist. Auf diese Weise wird sichergestellt, dass eine Akkumulatoreinheit, die beispielsweise durch einen Defekt die Vorrichtung nicht startet, aber den aufrechterhalt des Betriebs gewährleistet, noch immer effizient genutzt werden. Energiekapazität ist erfindungsgemäß die Energiemenge, die im Vergleich zur Gesamtenergiekapazität einer Akkumulatoreinheit zur Verfügung steht.

Falls Akkumulatoreinheiten gleich viel Energiekapazität aufweisen, wird die bevorzugte Reihenfolge der Akkumulatoreinheit anhand der absteigenden Gesamtenergiekapazitäten festgelegt, wobei die Akkumulatoreinheit mit der höheren Gesamtenergiekapazität zum Starten der Vorrichtung und Fortbewegungsvorrichtung verwendet wird. Gesamtenergiekapazität ist erfindungsgemäß die Energiemenge, die einer Akkumulatoreinheit insgesamt zur Verfügung steht.

In einer Ausführungsform wird die Energieversorgung der Vorrichtung von einer anderen Ackumulatoreinheit übernommen, sobald die Energiekapazität in einer Akkumulatoreinheit unter einen bestimmten Schwellenwert sinkt. Die Lebensdauer von Akkumulatoreinheiten kann durch effizientes Lade- und Entladeverhalten signifikant verlängert werden, indem sich die Energiekapazität der Akkumulatoreinheiten in einem optimalen Energiebereich, also in einem Bereich, in dem die Lebensdauer der Akkumulatoreinheiten möglichst hoch ist, befindet. Bevorzugt sollten Akkumulatoreinheiten weder komplett aufgeladen noch komplett entladen werden und bevorzugter sollte sich die Energiekapazität der Akkumulatoreinheiten möglichst in dem optimalen Energiebereich befinden, wobei der Unterschreitung des optimalen Energiebereichs einen größeren Effekt auf die Lebensdauer der Akkumulatoreinheit haben kann als die Überschreitung des optimalen Energiebereichs.

Der optimale Energiebereich der Akkumulatoren und/oder Akkumulatoreinheiten hat einen unteren Schwellenwert von ≥ 10 %, bevorzugt von ≥ 15 %, bevorzugter ≥ 20 %, jeweils gemessen an der Gesamtenergiekapazität, und einen oberen Schwellenwert von ≤ 90 %, bevorzugt ≤ 85 %, bevorzugter ≤ 80 %, jeweils gemessen an der Gesamtenergiekapazität.

Eine Umschaltung zwischen den mindestens zwei Akkumulatoren und/oder Akkumulatoreinheiten zwecks dem Zustand Betrieb oder Ladung erfolgt durch ein Steuergerät als Batterie-Managementsystem.

In einer ersten Ausführungsform ist das Steuergerät im Rahmen der vorliegenden Erfindung so eingerichtet, dass
das Fortbewegungsmittel nur mit dem ersten Akkumulator und/oder nur der ersten Akkumulatoreinheit betrieben wird, bis die Energiekapazität des ersten Akkumulators und/oder der ersten Akkumulatoreinheit unter einen unteren Schwellenwert gefallen ist, und
das Fortbewegungsmittel dann nur mit dem zweiten Akkumulator und/oder der zweiten Akkumulatoreinheit betrieben wird,
wobei der zweite Akkumulator und/oder die zweite Akkumulatoreinheit über dem unteren Schwellenwert der Energiekapazität des ersten Akkumulators und/oder der ersten Akkumulatoreinheit liegt.

In einer weiteren Ausführungsform ist das Steuergerät weiterhin so eingerichtet, dass
das Fortbewegungsmittel nur mit dem zweiten Akkumulator und/oder nur der zweiten Akkumulatoreinheit betrieben wird, bis die Energiekapazität des zweiten Akkumulators und/oder der zweiten Akkumulatoreinheit unter einen unteren Schwellenwert gefallen ist, und
das Fortbewegungsmittel dann nur mit dem ersten Akkumulator und/oder der ersten Akkumulatoreinheit betrieben wird,
wobei der erste Akkumulator und/oder die erste Akkumulatoreinheit über der unteren Energiekapazität des zweiten Akkumulators und/oder der zweiten Akkumulatoreinheit liegt.

In einer weiteren Ausführungsform ist das Steuergerät weiterhin so eingerichtet, dass
das Fortbewegungsmittel mindestens einen weiteren Akkumulator und/oder eine weitere Ackumulatoreinheit aufweist und die Steuerung so eingerichtet ist, dass
das Fortbewegungsmittel nur mit dem weiteren Akkumulator und/oder nur der weiteren Akkumulatoreinheit betrieben wird, bis die Energiekapazität des weiteren Akkumulators und/oder der weiteren Akkumulatoreinheit unter den unteren Schwellenwerten des ersten Akkumulators und/oder der ersten Akkumulatoreinheit und/oder des zweiten Akkumulators und/oder der zweiten Akkumulatoreinheit gefallen ist, und
das Fortbewegungsmittel dann nur mit dem ersten Akkumulator und/oder der zweiten Akkumulatoreinheit betrieben wird,
wobei der erste Akkumulator und/oder die erste Akkumulatoreinheit und/oder der zweite Ackumulator und/oder die zweite Akkumulatoreinheit eine Energiekapazität über dem unteren Schwellenwert des mindestens einen weiteren Akkumulators und/oder der mindestens einen weiteren Akkumulatoreinheit aufweist.

In einer weiteren Ausführungsform ist das Steuergerät so eingerichtet, dass
das Fortbewegungsmittel nur mit dem ersten Akkumulator und/oder nur der ersten Akkumulatoreinheit betrieben wird, bis die Energiekapazität des zweiten Akkumulators und/oder der zweiten Akkumulatoreinheit über einen oberen Schwellenwert gestiegen ist, und
das Fortbewegungsmittel dann nur mit dem zweiten Akkumulator und/oder der zweiten Akkumulatoreinheit betrieben wird,
wobei der zweite Akkumulator und/oder die zweite Akkumulatoreinheit eine Energiekapazität über dem oberen Schwellenwert des ersten Akkumulators und/oder der ersten Akkumulatoreinheit aufweist.

In einer weiteren Ausführungsform ist das Steuergerät weiterhin so eingerichtet, dass
das Fortbewegungsmittel nur mit dem zweiten Akkumulator und/oder nur der zweiten Akkumulatoreinheit betrieben wird, bis die Energiekapazität des ersten Akkumulators und/oder der ersten Akkumulatoreinheit über einen oberen Schwellenwert gestiegen ist, und
das Fortbewegungsmittel dann nur mit dem ersten Akkumulator und/oder der ersten Akkumulatoreinheit betrieben wird,
wobei der erste Akkumulator und/oder die erste Akkumulatoreinheit eine Energiekapazität über dem oberen Schwellenwert des zweiten Akkumulators und/oder der zweiten Akkumulatoreinheit aufweist.

In einer weiteren Ausführungsform ist das Steuergerät weiterhin so eingerichtet, dass
das Fortbewegungsmittel mindestens einen weiteren Akkumulator und/oder eine weitere Ackumulatoreinheit aufweist und die Steuerung so eingerichtet ist, dass
das Fortbewegungsmittel nur mit dem weiteren Akkumulator und/oder nur der weiteren Akkumulatoreinheit betrieben wird, bis die Energiekapazität des ersten Akkumulators und/oder der ersten Akkumulatoreinheit und/oder des zweiten Akkumulators und/oder der zweiten Akkumulatoreinheit über einen oberen Schwellenwerten gestiegen ist, und
das Fortbewegungsmittel dann nur mit dem ersten Akkumulator und/oder der ersten Akkumulatoreinheit und/oder dem zweiten und/oder der zweiten Akkumulatoreinheit betrieben wird,
wobei der erste Akkumulator und/oder die erste Akkumulatoreinheit und/oder der zweite Ackumulator und/oder die zweite Akkumulatoreinheit eine Energiekapazität über dem oberen Schwellenwert des mindestens einen weiteren Akkumulators und/oder der mindestens einen weiteren Akkumulatoreinheit aufweist.

In einer weiteren Ausführungsform ist das Steuergerät so eingerichtet, dass das Fortbewegungsmittel nur mit dem ersten Akkumulator und/oder nur der ersten Akkumulatoreinheit betrieben wird, bis die eine Energiekapazität des ersten Akkumulators und/oder der ersten Ackumulatoreinheit unter einen unter Schwellenwert gefallen ist,
und das Fortbewegungsmittel dann nur mit dem zweiten Akkumulator und/oder der zweiten Akkumulatoreinheit betrieben wird, wobei der zweite Akkumulator und/oder die zweite Akkumulatoreinheit eine Energiekapazität über dem unteren Schwellenwert des ersten Akkumulators und/oder der ersten Akkumulatoreinheit aufweist,
bis die eine Energiekapazität des zweiten Akkumulators und/oder der zweiten Akkumulatoreinheit unter einen unteren Schwellenwert gefallen ist, und
wenn die Vorrichtung mindestens einen weiteren Akkumulator und/oder mindestens eine weitere Akkumulatoreinheit aufweist, das Fortbewegungsmittel dann nur mit dem mindestens einen weiteren Akkumulator und/oder der mindestens einen weiteren Akkumulatoreinheit betrieben wird, wobei der mindestens eine weitere Akkumulator und/oder die mindestens eine weitere Akkumulatoreinheit eine Energiekapazität über dem unteren Schwellenwerten des ersten und/oder des zweiten Akkumulators und/oder der ersten und/oder der zweiten Akkumulatoreinheit aufweist.

Optionale weitere Akkumulatoreinheiten, können nach dem gleichen Prinzip von dem Steuergerät betrieben werden, wobei sich die Reihenfolge bei gleicher Energiekapazität bevorzugt an der Gesamtenergiekapazität orientiert.

Auf diese Weise wird die Lebensdauer aller Akkumulatoreinheiten des Fortbewegungsmittels gewährleistet und ein Überladen sowie ein Laden von noch komplett geladenen Akkumulatoreinheiten reduziert. Gleichzeitig wird auch ein komplettes Entladen der Akkumulatoreinheiten verhindert und die Lebensdauer der Akkumulatoreinheiten effizient verlängert.

Bevorzugt wird beim Starten des Betriebs des Fortbewegungsmittels die erste Akkumulatoreinheit verwendet, wobei sich die Auswahl bevorzugt nach der Energiekapazität und/oder Gesamtenergiekapazität, bevorzugter erst nach der Energiekapazität und bei gleicher Energiekapazität anschließend nach der Gesamtenergiekapazität richtet, wobei bevorzugt die Ackumulatoreinheit mit der höchsten Energiekapazität und/oder Gesamtenergiekapazität als erste Akkumulatoreinheit verwendet wird. Hierdurch wird ein gleichmäßiges Verwenden der Akkumulatoreinheiten in möglichst den optimalen Energiebereichen gewährleistet.

In einer weiteren Ausführungsform wird der Betrieb einer Akkumulatoreinheit bevorzugt, die für einen definierten Mindestzeitraum bevorzugt von Wochen, bevorzugter von Tagen, im Vergleich zu den anderen verwendeten Akkumulatoreinheiten, nicht verwendet wurde. Auf diese Weise kann der Betrieb andere Akkumulatoreinheiten neben der ersten Akkumulatoreinheit, die dauerhaft nicht genutzt werden würden, gewährleistet werden. Entsprechend wird die dauerhafte und extrem schädliche Nichtbenutzung der Akkumulatoreinheiten vermieden und der Gefahr eines plötzlichen Ausfallens der Akkumulatoreinheiten vorgebeugt.

In einer Ausführungsform wird eine Akkumulatoreinheit, die nicht für den Betrieb der Vorrichtung und des Fortbewegungsmittels verwendet wird, während des Betriebs des Fortbewegungsmittels aufgeladen werden. Elektrische Energie bzw. Energieüberschuss generiert durch einen Teil der Vorrichtung wird in diejenige Akkumulatoreinheiten eingespeist, die nicht komplett geladen sind. Die Reihenfolge der Aufladung orientiert sich bevorzugt an der höchsten Differenz zwischen Energiekapazität und Gesamtenergiekapazität, wobei eine Akkumulatoreinheit bevorzugt bis zum oberen Schwellenwert aufgeladen wird, bevor eine andere Akkumulatoreinheit aufgeladen wird bzw. bis die Akkumulatoreinheiten vollständig geladen werden. Wird einer der Schwellenwerte erreicht, wird eine andere Akkumulatoreinheit unter diesem erreichten Schwellenwert weiter aufgeladen. Durch diese Verschaltung ist die Verwendung eines Wechslers, der den elektrischen Spannungsfluss bei einer Akkumulatoreinheit zwischen Laden und Entladen wechseln müsste, nicht notwendig, wie es typischerweise der Fall ist. Darüber hinaus wird so ein komplettes Entladen der Akkumulatoren möglichst verhindert.

In einer Ausführungsform werden die Akkumulatoreinheiten nicht mit dem generierten Strom aufgeladen, wenn sie komplett aufgeladen sind oder sie zum Betrieb verwendet werden.

Das Aufladen der Akkumulatoren und/oder Akkumulatoreinheiten erfolgt durch einen nah an dem Motor verbauten Generator, der wiederum durch mindestens einen der in dem Fahrzeug verbauten Elektromotoren betrieben wird.

Wie bereits ausgeführt wird damit die Verwendung eines durch Verbrennungsmotoren betriebenen Generatoren vermieden.

Das elektrische Fortbewegungsmittel weist mindestens einen Elektromotor auf. Vorzugsweise weist das Fortbewegungsmittel mindestens zwei, weiter bevorzugt mindestens drei, noch weiter bevorzugt mindestens vier, Elektromotoren auf; diese werden auch zum Betrieb des Generators verwendet.

Der Generator ist bei einem zweiachsigen Fortbewegungsmittel vorzugsweise näher an der (in üblicher Fahrrichtung) hinteren Achse angeordnet. Insbesondere ist der Schwerpunkt des Generators so in dem Fortbewegungsmittel angeordnet, dass der direkte (kürzeste und geradlinige) Abstand zwischen dem Schwerpunkt des Generators und der hinteren Achse kürzer ist als der direkte (kürzeste und geradlinige) Abstand zwischen dem Schwerpunkt des Generators und der vorderen Achse.

Diese Anordnung des Generators ermöglicht einen bevorzugten kurzen Übertragungsweg von Elektromotor zu Generator.

Im Rahmen der vorliegenden Erfindung ist ein Kabel, welches den Generator mit den verwendeten Akkumulatoren und/oder Akkumulatoreinheiten verbindet, vorgesehen. Zusätzlich ist ein Kabel vom Steuergerät, welches als Batterie-Management ausgebildet ist, zu den Akkumulatoren/Akkumulatoreinheiten und dem Generator nebst Keilriemen zur Abnahme vorzugsweise mittig zur Antriebswelle im Rahmen der vorliegenden Erfindung vorgesehen.

Insbesondere erfolgt die Übertragung mittels Keilriemen oder Welle von dem jeweiligen Elektromotor zum Generator.

Der Rahmen der vorliegenden Erfindung ist der Generator vorzugsweise ein E-Generator.

Im Nachfolgenden werden technische Maßnahmen beschrieben, mit welchen Akkumulatoreinheiten, die nicht zum Betrieb des Fortbewegungsmittels verwendet werden, geladen werden.

In einer ersten Ausgestaltung umfasst das erfindungsgemäße Fortbewegungsmittel einen Elektromotor, der die Fortbewegungsvorrichtung mit elektrischer Energie antreibt und gleichzeitig den zuvor beschriebenen Generator mit elektrischer Energie versorgen kann. Beispielsweise kann der Motor auch durch einen Bremsvorgang oder durch bergab fahren elektrische Energie bereitstellen, die an eine Akkumulatoreinheit weitergegeben werden kann, die damit geladen wird. In dieser Ausgestaltung ist der Elektromotor bevorzugt an einer Achse des Fortbewegungsmittel vorgesehen. Weiter bevorzugt sind an zwei Achsen des erfindungsgemäßen Fortbewegungsmittels die Elektromotoren vorgesehen.

Bevorzugt umfasst die Vorrichtung einen Regler zur Beschleunigung des Fortbewegungsmittels, dass mit dem Steuergerät verbunden ist. Durch die Verschaltung mit dem Steuergerät kann die Geschwindigkeit mit der notwendigen Energie und der generierten Energie in Zusammenhang gebracht werden, um so ein besonders gutes Leistungsprofil zu erstellen. Typischerweise sind die Regler zur Beschleunigung direkt mit dem Akkumulator verbunden, wodurch die Steuerung jedoch nachteilig dezentral abläuft.

In einer Ausführungsform werden durch das Steuergerät der/die Elektromotor(en), die Mehrzahl der Akkumulatoreinheiten und der/die Generator(en) gesteuert. Bevorzugt wird durch das Steuergerät mindestens die Größe elektrische Spannung und/oder Widerstand der Akkumulatoren und/oder Akkumulatoreinheiten gemessen.

In einer anderen Ausführungsform wird durch das Steuergerät mindestens die Größe Elektromotorspannung und/oder Elektromotorwiderstand des mindestens einen Elektromotors gemessen.

In einer weiteren Ausführungsform wird durch das Steuergerät mindestens die Größe elektrische Spannung und/oder Widerstand der Akkumulatoren und/oder Akkumulatoreinheiten und des mindestens einen Elektromotors gemessen.

In einer weiteren Ausführungsform ist das Steuergerät so ausgelegt, dass es elektrische Energie in den Akkumulatoren und/oder den Akkumulatoreinheiten regeln kann.

In einer weiteren Ausführungsform wird durch eine Software ein Energieprofil erstellt und das Steuergerät gesteuert. Bevorzugt wird aus den von dem Steuergerät gemessenen Größen, umfassend mindestens die Größen elektrische Spannung und/oder Widerstand der Akkumulatoren und/oder Akkumulatoreinheiten und/oder des mindestens einen Elektromotor das Energieprofil erstellt. Hierbei kann die Reichweite des Fortbewegungsmittels dynamisch kalkuliert werden und bevorzugt Routen und/oder das Energieprofil entsprechend angepasst werden.

Bevorzugt kann auf die Software des Fortbewegungsmittels ein oder mehrere Softwareupdates übertragen und implementiert werden, wobei bevorzugt das Update über eine Kabelverbindung und/oder über W-LAN und/oder über Bluetooth stattfinden kann. Darüber hinaus ist auch ein Datenaustausch über eine Kabelverbindung und/oder W-LAN und/oder Bluetooth des Fortbewegungsmittels mit einer Einheit wie einem Mobiltelefon, bevorzugt über eine Applikation möglich, um eine smarte Routenführung und ein visuell oder auditiv erfassbare Kontrolleinrichtung für den Benutzer zu schaffen. Besonders bevorzugt ist ein Datenaustausch über Bluetooth, da die meisten Einheiten wie Mobiltelefone mit diesem System ausgestattet sind. Darüber hinaus sind das Fortbewegungsmittel und die mit Bluetooth ausgestattete Einheit, wie ein Mobiltelefon während des Betriebs in direkter Nähe, wodurch die direkte Verbindung zwischen Fortbewegungsmittel und Einheit ausgenutzt werden kann.

Bevorzugt ist mindestens eine Vorrichtung zum Überwachen der Elektromotorspannung und/oder des Elektromotorstroms des mindestens einen Elektromotors und das auf dieser Überwachung basierende Steuern bevorzugt durch das Steuergerät der Vielzahl an Akkumulatoreinheiten und/oder des mindestens einen Elektromotors umfasst.

In einer beispielhaften Ausführungsform können zwei oder mehr Elektromotoren in einem erfindungsgemäßen Fortbewegungsmittel vorgesehen sein, das zum regenerativen Bremsen geeignet ist. Zum Beispiel können die zwei oder mehr Elektromotoren in einem Elektrofahrrad, einem Elektroroller, einem E-Scooter, einem Elektrofahrzeug, einem Hybridfahrzeug, einem elektrisch angetriebenen Rollstuhl, einem elektrischen Golfwagen oder dergleichen vorgesehen sein, wobei ein E-Scooter bevorzugt ist.

Bevorzugt umfasst die Vorrichtung einen ladenden Feldeffekttransistor und einen entladenden Feldeffekttransistor, die in zueinander entgegengesetzten Polaritäten geschaltet sind;
ein mit den Feldeffekttransistoren in Reihe geschalteter Stromsensor zum Messen eines Ist-Stroms durch die Feldeffekttransistoren, wobei
der ladende Feldeffekttransistor den Ist-Strom auf einen Ladesollstromwert regelt, wenn ein Akkumulator und/oder Akkumulatoreinheit geladen wird, und
der entladende Feldeffekttransistor den Ist-Stromwert auf einen Entladesollstromwert regelt, wenn ein Akkumulator und/oder Akkumulatoreinheit entladen wird.

Weiterhin betrifft die Erfindung ein Verfahren zum Betreiben eines Fortbewegungsmittels, umfassend
Abgabe einer ersten elektrischer Spannung durch den ersten Akkumulator und/oder die erste Akkumulatoreinheit an den Elektromotor geeignet zum Betrieb des Fortbewegungsmittels;
Abgabe einer ersten elektrischer Spannung durch den zweiten Akkumulator und/oder die zweite Akkumulatoreinheit an den Elektromotor geeignet zum Betrieb des Fortbewegungsmittels;
optional Abgabe einer ersten elektrischer Spannung durch einen weiteren Akkumulator und/oder einer weiteren Akkumulatoreinheit an den Elektromotor geeignet zum Betrieb des Fortbewegungsmittels;

Steuern der Abgaben dergestalt, um die mindestens zwei Akkumulatoren und/oder Akkumulatoreinheiten so zu steuern, dass das Fortbewegungsmittel entweder
a) nur mit dem ersten Akkumulator und/oder der ersten Akkumulatoreinheit betrieben wird, oder
b) nur mit dem zweiten Akkumulator und/oder der zweiten Akkumulatoreinheit betrieben wird,
dadurch gekennzeichnet, dass
der zweite Akkumulator und/oder die zweite Akkumulatoreinheit und/oder optional mindestens ein weiterer Akkumulator und/oder mindestens eine weitere Akkumulatoreinheit geladen wird, während die Spannung des ersten Akkumulators und/oder Akkumulatoreinheit zur Fortbewegung des Fortbewegungsmittels Anwendung findet; und
der erste Akkumulator und/oder die erste Akkumulatoreinheit und/oder optional mindestens ein weiterer Akkumulator und/oder mindestens eine weitere Akkumulatoreinheit geladen wird, während die Spannung des zweiten Akkumulators und/oder Akkumulatoreinheit zur Fortbewegung des Fortbewegungsmittels Anwendung findet;
Messen der Energiekapazität der Akkumulatoren und/oder Akkumulatoreinheiten durch das Steuergerät und/oder Messen der Energiekapazität des mindestens einen Elektromotors durch das Steuergerät;
optional Kalkulieren der Reichweite der Fortbewegungsvorrichtung durch Erstellung eines dynamischen Verbrauchprofils; und
optional Steuern der Vielzahl an Akkumulatoren anhand des dynamischen Verbraucherprofils,
wobei mindestens einer der nicht zum Betrieb des Fortbewegungsmittels verwendeten Akkumulatoren und/oder Akkumulatoreinheiten durch einen durch einen Elektromotor betriebenen Generator geladen wird.

Weiterhin betrifft die Erfindung die Verwendung der vorstehend beschriebenen Vorrichtung zum Betreiben eines Fortbewegungsmittels.

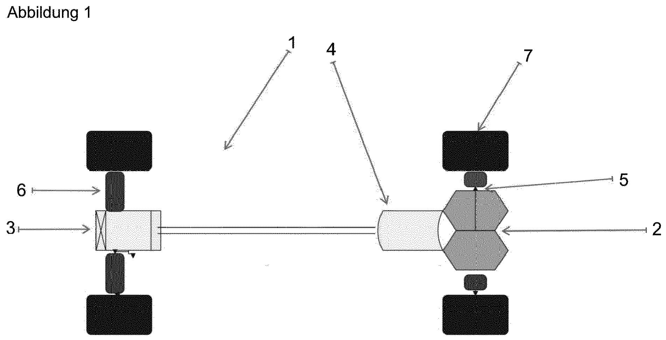

Die vorliegende Erfindung wird anhand der Abbildung 1 näher erläutert.

In der Abbildung 1 wird schematisch ein Antriebsstrang 1 eines elektrisch betriebenen Fortbewegungsmittels gezeigt, in welchem die Bezugszeichen folgende Bedeutung aufweisen:
1 Erfindungsgemäße Vorrichtung
2 Zwei verbaute 3-Phasen Hochvolt-Elektromotoren ( E-Hauptmotoren), wobei zwischen beiden E-Motoren mittig noch ein Keilriemen zur Kraftübertragung zum leicht Versetzten E-Generator (nicht dargestellt) vorgesehen ist
3 Batterie-Management mit Akkumaltoren-Einheiten sowie Leistungselektronik
4 Vorgelagerter leicht versetzter E-Generator, wobei eine Anbindung des E-Generators mit über seitlich platzierte Keilriemenabnahme (nicht dargestellt) erfolgt
5 Hintere Achse
6 Vordere Achse
7 Reifen

## Patentansprüche

1. Vorrichtung zum Betreiben eines Fortbewegungsmittels, umfassend
mindestens einen Elektromotor, der als Generator fungieren kann;
mindestens einen ersten Akkumulator und/oder eine erste Akkumulatoreinheit geeignet zur Bereitstellung einer ersten elektrischen Spannung zum Betrieb des Fortbewegungsmittels;
mindestens einen zweiten Akkumulator und/oder eine zweite Akkumulatoreinheit geeignet zur Bereitstellung einer elektrischen Spannung zum Betrieb des Fortbewegungsmittels,
ein Steuergerät als Batterie-Managementsystem, welche dafür eingerichtet ist, die mindestens zwei Akkumulatoren und/oder Akkumulatoreinheiten so zu steuern, dass das Fortbewegungsmittel entweder
a) nur mit dem ersten Akkumulator und/oder der ersten Akkumulatoreinheit betrieben wird, oder
b) nur mit dem zweiten Akkumulator und/oder der zweiten Akkumulatoreinheit betrieben wird,
**dadurch gekennzeichnet, dass**
der zweite Akkumulator und/oder die zweite Akkumulatoreinheit geladen wird, während die Spannung des ersten Akkumulators und/oder Akkumulatoreinheit zur Fortbewegung des Fortbewegungsmittels Anwendung findet; und
der erste Akkumulator und/oder die erste Akkumulatoreinheit geladen wird, während die Spannung des zweiten Akkumulators und/oder Akkumulatoreinheit zur Fortbewegung des Fortbewegungsmittels Anwendung findet; und
die Vorrichtung zusätzlich einen durch den mindestens einen Elektromotor zu betreibenden Generator verfügt und der Generator während des Betriebs denjenigen Akkumulator und/oder diejenige Akkumulatoreinheit lädt, welche nicht zum Betrieb des Fortbewegungsmittels verwendet wird.

2. Vorrichtung nach Anspruch 1, **dadurch gekennzeichnet, dass** die Steuerung so eingerichtet ist, dass
das Fortbewegungsmittel nur mit dem ersten Akkumulator und/oder nur der ersten Ackumulatoreinheit betrieben wird, bis die Energiekapazität des ersten Akkumulators und/oder der ersten Akkumulatoreinheit unter einen unteren Schwellenwert gefallen ist, und
das Fortbewegungsmittel dann nur mit dem zweiten Akkumulator und/oder der zweiten Akkumulatoreinheit betrieben wird,
wobei der zweite Akkumulator und/oder die zweite Akkumulatoreinheit eine Energiekapazität über dem unteren Schwellenwert des ersten Akkumulators und/oder der ersten Akkumulatoreinheit aufweist.

3. Vorrichtung nach Anspruch 1 oder 2, **dadurch gekennzeichnet, dass** die Steuerung so eingerichtet ist, dass
das Fortbewegungsmittel nur mit dem zweiten Akkumulator und/oder nur der zweiten Akkumulatoreinheit betrieben wird, bis die Energiekapazität des zweiten Akkumulators und/oder der zweiten Akkumulatoreinheit unter einen unteren Schwellenwert gefallen ist, und
das Fortbewegungsmittel dann nur mit dem ersten Akkumulator und/oder der ersten Akkumulatoreinheit betrieben wird,
wobei der erste Akkumulator und/oder die erste Akkumulatoreinheit eine Energiekapazität über dem unteren Schwellenwert des zweiten Akkumulators und/oder der zweiten Akkumulatoreinheit aufweist.

4. Vorrichtung nach einem der Ansprüche 1 bis 3, **dadurch gekennzeichnet, dass**
das Fortbewegungsmittel mindestens einen weiteren Akkumulator und/oder eine weitere Akkumulatoreinheit aufweist und die Steuerung so eingerichtet ist, dass
das Fortbewegungsmittel nur mit dem weiteren Akkumulator und/oder nur der weiteren Akkumulatoreinheit betrieben wird, bis die Energiekapazität des weiteren Akkumulators und/oder der weiteren Akkumulatoreinheit unter einen unteren Schwellenwert gefallen ist, und
das Fortbewegungsmittel dann nur mit dem ersten Akkumulator und/oder der ersten Akkumulatoreinheit und/oder dem zweiten Akkumulator und/oder der zweiten Akkumulatoreinheit betrieben wird,
wobei der erste Akkumulator und/oder die erste Akkumulatoreinheit und/oder der zweite Akkumulator und/oder die zweite Akkumulatoreinheit Energiekapazität über dem unteren Schwellenwert des mindestens einen weiteren Akkumulators und/oder der mindestens einen weiteren Akkumulatoreinheit aufweist.

5. Vorrichtung nach einem der Ansprüche 1 bis 4, **dadurch gekennzeichnet, dass** der Generator bei einem zweiachsigen Fortbewegungsmittel vorzugsweise näher an der (in üblicher Fahrrichtung) hinteren Achse angeordnet ist als an der (in üblicher Fahrrichtung) vorderen Achse.

6. Vorrichtung nach einem der Ansprüche 1 bis 4, **dadurch gekennzeichnet, dass** der Schwerpunkt des Generators so in dem Fortbewegungsmittel angeordnet ist, dass der direkte Abstand zwischen dem Schwerpunkt des Generators und der hinteren Achse kürzer ist als der direkte Abstand zwischen dem Schwerpunkt des Generators und der vorderen Achse.

7. Vorrichtung nach einem der Ansprüche 1 bis 6, **dadurch gekennzeichnet, dass** der Ackumulator und/oder die Akkumulatoreinheit, welche(r) elektrische Energie an den Elektromotor liefert, bei Unterschreitung eines Energievorrats von ≤ 10 %, bevorzugt von 15 %, bevorzugter ≤ 20 %, durch einen anderen Akkumulator und/oder eine andere Akkumulatoreinheit als Energielieferant elektrischer Energie abgelöst wird.

8. Vorrichtung nach einem der Ansprüche 1 bis 7, **dadurch gekennzeichnet, dass** die Vorrichtung in einem Fortbewegungsmittel Anwendung findet.

9. Vorrichtung nach Anspruch 8, **dadurch gekennzeichnet, dass** die Vorrichtung in einem Elektrofahrrad, einem Elektroroller, einem E-Scooter, einem Elektrofahrzeug, einem Hybridfahrzeug, einem elektrisch angetriebenen Rollstuhl oder einem elektrischen Golfwagen verwendet wird.

10. Vorrichtung nach einem der Ansprüche 1 bis 9, **dadurch gekennzeichnet, dass** das Steuergerät so ausgelegt ist, dass es elektrische Energie in den Akkumulatoren und/oder den Akkumulatoreinheiten regeln kann.

11. Elektrofahrrad, einem Elektroroller, einem E-Scooter, einem Elektrofahrzeug, einem Hybridfahrzeug, einem elektrisch angetriebenen Rollstuhl oder einem elektrischen Golfwagen, umfassend eine Vorrichtung gemäß einem der Ansprüche 1 bis 9.

12. Verfahren zum Betreiben eines Fortbewegungsmittels gemäß Anspruch 11, umfassend
Abgabe einer ersten elektrischer Spannung durch den ersten Akkumulator und/oder die erste Akkumulatoreinheit an den Elektromotor geeignet zum Betrieb des Fortbewegungsmittels;
Abgabe einer ersten elektrischer Spannung durch den zweiten Akkumulator und/oder die zweite Akkumulatoreinheit an den Elektromotor geeignet zum Betrieb des Fortbewegungsmittels;
optional Abgabe einer ersten elektrischer Spannung durch einen weiteren Akkumulator und/oder einer weiteren Akkumulatoreinheit an den Elektromotor geeignet zum Betrieb des Fortbewegungsmittels;
Steuerung bevorzugt durch das Steuergerät, um die mindestens zwei Akkumulatoren und/oder Akkumulatoreinheiten so zu steuern, dass das Fortbewegungsmittel entweder
a) nur mit dem ersten Akkumulator und/oder der ersten Akkumulatoreinheit betrieben wird, oder
b) nur mit dem zweiten Akkumulator und/oder der zweiten Akkumulatoreinheit betrieben wird,
**dadurch gekennzeichnet, dass**
der zweite Akkumulator und/oder die zweite Akkumulatoreinheit und/oder optional mindestens eine weitere Akkumulatoren und/oder mindestens eine weitere Akkumulatorenanordnung induktiv geladen wird, während die Spannung des ersten Akkumulators und/oder Akkumulatoreinheit zur Fortbewegung des Fortbewegungsmittels Anwendung findet; und
der erste Akkumulator und/oder die erste Akkumulatoreinheit und/oder optional mindestens eine weitere Akkumulatoren und/oder mindestens eine weitere Akkumulatorenanordnung induktiv geladen wird, während die Energiekapazität des zweiten Akkumulators und/oder Akkumulatoreinheit zur Fortbewegung des Fortbewegungsmittels Anwendung findet;
Messen der elektrischen Spannung der Akkumulatoren und/oder Akkumulatorenanordnungen durch das Steuergerät und/oder Messen der elektrischen Energiekapazität des mindestens einen Elektromotors durch das Steuergerät;
optional Kalkulation der Reichweite des der Fortbewegungsvorrichtung durch Erstellung eines dynamischen Verbrauchprofils; und
optional Steuern der Vielzahl an Akkumulatoren anhand des dynamischen Verbraucherprofils.
